# EUROPEAN PATENT APPLICATION

(11) **EP 3 795 039 A1**
(43) Date of publication of application: **24.03.2021**
(21) Application number: 20196878.1
(22) Date of filing: 18.09.2020
(51) Int. Cl.: A47G 19/34, B65D 47/26, G01F 11/26

(54) **DISPENSING LID FOR HANDHELD CONTAINER**

(30) Priority: 20.09.2019 DK PA201970579
(71) Applicant: Wedtech Aps, 3490 Kvistgård (DK)
(72) Inventor: WEDELL, Anders, 3490 Kvistgård (DK)
(74) Representative: AWA Denmark A/S

(57) **Abstract**

Dispensing lid (1) and handheld container with the dispensing lid. The dispensing lid comprises a dispensing spout (2) and a lower tube (3), where the dispensing spout (2) and the lower tube (3) define a passage for dispensing. The dispensing lid (1) further comprises a sealing mechanism comprising a moveable sealing plate (6), where the sealing plate (6) is provided with a first through hole (15) and is moveably suspended in the dispensing lid (1). The lower tube (3) comprises one outer tube and at least one inner tube (5), where the at least one inner tube (5) extends along the outer tube and is mechanically secured to the outer tube. The first through hole (15) has a diameter equivalent to or smaller than the at least one inner tube (5). The moveable sealing plate (6) can be moved between a first position, where the first through hole (15) is located in the gap between the lower tube (3) and the dispensing spout (2), a second position, where another part of the sealing plate (6) is located in the gap between the lower tube (3) and the dispensing spout (2), and a third position, where the sealing plate (6) does not block the passage between the lower tube (3) and the dispensing spout (2).

## Description

### Technical field of the invention

The present invention concerns a dispensing lid for a handheld container and a handheld container with the dispensing lid.

### Background of the invention

When dispensing granular material from handheld containers obtaining the proper quantity can be difficult and might cause problems for a user of the container. Especially when dispensing granular materials such as sugar or coffee granules, in particular instant coffee, obtaining the proper dispensed quantity can be critical for the desired result.

Usually, existing dispensing lids and dispensing containers found in miscellaneous cafe settings are provided with a dispensing lid, comprising a dispensing spout and a lower tube, where the lower tube extends into the handheld container. To dispense material from such a container, the container is tilted and granular material collects in the lower tube. The collected granular material is subsequently released from the dispensing spout. Although the tube can move relative to the lid in some types, the dispensed quantity from such dispensing lids and dispensing containers cannot be precisely regulated, the dispensed quantity is essentially the same for all dispensing procedures. This can pose a problem since the pre-set dispensing quantity does not necessarily provide the desired result for all users. For example, individual desires in terms of the strength or sweetness of the coffee may vary considerably.

If the granular material starts to form lumps this will add to the existing problems when dispensing using existing dispensing lids and dispensing containers. Lump formation of the granular material can cause the lower tube to clog which can render the dispensing procedure difficult or completely prevent it.

### Summary of the invention

The object of the present invention is to solve or as a minimum reduce the problems described above.

According to a first aspect of the invention, this is achieved by means of a dispensing lid used to dispense from a handheld container, where the dispensing lid comprises a dispensing spout and a lower tube, where the lower tube is designed to extend within the handheld container and where the dispensing spout and the lower tube define a passage for dispensing, characterised in that the dispensing lid further comprises a sealing mechanism comprising a moveable sealing plate, where the sealing plate is provided with a first through hole and is moveably suspended in the dispensing lid, where there is a gap between the dispensing spout and the lower tube, where the size of the gap is essentially equivalent to the thickness of the sealing plate, where the lower tube comprises one outer tube and at least one inner tube, where the at least one inner tube extends along the outer tube and is mechanically secured to the outer tube, where the first through hole has a diameter equivalent to or smaller than the at least one inner tube, where the moveable sealing plate can be moved between a first position, where the first through hole is located in the gap between the lower tube and the dispensing spout, a second position, where another part of the sealing plate is located in the gap between the lower tube and the dispensing spout, and a third position, where the sealing plate does not block the passage between the lower tube and the dispensing spout.

In this context the expression another part of the sealing plate should be taken to mean a part of the sealing plate which can seal off the passage between the lower tube and dispensing spout. Sealing off the passage prevents moisture from passing through the passage. This can be a major advantage when the dispensing lid is screwed onto a container containing for example sugar since this would prevent the sugar from forming lumps due to moisture. Additionally, if the dispensing lid is used for a container with coffee granules, such as instant coffee, it would seal off the passage to prevent the coffee aroma from escaping thereby retaining the quality of the instant coffee for a longer period of time.

The sealing plate can come in multiple shapes. The sealing plate can be designed in the form of a disc that can pivot. A pivotal disc is an easy way of controlling whether the through hole is between the lower tube and the dispensing spout or whether the other part of the sealing plate is between the lower tube and the dispensing spout. Furthermore, a pivotal disc is space effective.

Alternatively, the sealing plate could be of a rectangular shape and designed to move in the direction of at least one axis thereby acting as a sliding bolt.

The possibility of the sealing plate to move between three positions allows a user of the dispensing lid to choose between different dispensing quantities. Different dispensing quantities make it easier for users of the dispensing lid to obtain the desired dispensing quantities.

When in the third position, the sealing plate does not block the passage thereby allowing dispensing from the entire lower tube. When in the second position, the sealing plate blocks the passage and prevents dispensing; this is particularly advantageous when the dispensing lid is not to be used for dispensing but merely acts as a lid. When the sealing plate is in the first position, dispensing only is effected from the at least one inner tube, whereby a smaller dispensed quantity is released than when the sealing plate is in the third position. The fact that the dispensing lid can be adjusted to suit the preferences of different users is a major advantage since it varies considerably from one person to the other how strong they like their coffee and how sweet it should be.

In one embodiment, the sealing mechanism further comprises an axle and an arm, where the axle is connected to the sealing plate, where the arm is connected to the axle and designed to extend outside of the handheld container, where a user of the dispensing lid can move the arm and thereby move the sealing plate.

In that a user can interact with an arm makes it easy for a user to choose the position of the sealing plate. The arm can further comprise a handle. A handle on the arm would further enhance the user-friendliness of the dispensing lid in that the handle would provide an intuitive place for interaction with the dispensing lid. The very movement of the arm can form an essentially circular movement if, for example, the sealing plate is a disc. The arm movement could also be linear if the sealing plate has the function of a sliding bolt.

In one embodiment the dispensing lid comprises a first indent and a second indent, where the sealing mechanism arm comprises a spring ball, where the spring ball is designed to engage with the first indent and the second indent, where a user of the dispensing lid can move the arm to allow the spring ball to engage with the first indent or the second indent, where the other half of the moveable sealing plate is located in the gap between the lower tube and the dispensing spout when the spring ball has engaged with the second indent, and where the first through hole is located in the gap between the lower tube and the dispensing spout when the spring ball has engaged with the first indent.

The engaging action between the spring ball and the indents ensures that the sealing plate does not move inappropriately. If a user chooses to block the passage by allowing the spring ball to engage with the second indent, this security feature prevents the passage from opening inappropriately. Thereby, improper spillage will be avoided. Additionally, when dispensing from the at least one tube, it is certain that the sealing plate does not move during dispensing.

In one embodiment the lower tube comprises several inner tubes, and where the sealing plate comprises several through holes, where each of the several inner tubes has a single associated through hole with a diameter equivalent to the associated inner tube such that a user of the dispensing lid can move the sealing plate in order to control whether the other part of the sealing plate or which of the several through holes are in the gap between the lower tube and the dispensing spout.

The several inner tubes allow a user to choose between several dispensing options. The several dispensing options make it easier to achieve a desired dispensing outcome. If the dispensing lid is further provided with a spring ball, as described above, each of the inner tubes can have an associated indent which makes it easy for the user of the dispensing lid to choose which of the several inner tubes to be used for dispensing.

In one embodiment the lower tube, the sealing plate and the dispensing spout are made of stainless steel and/or a synthetic material such as plastic.

Stainless steel is a hard-wearing material and easy to clean. These properties are optimal for an article for everyday use which will see wear and cleaning. Alternatively, certain components or all of them can be made of a synthetic material such as plastic. If the container on which the dispensing lid is placed is made of a synthetic material, it can be advantageous if the dispensing lid is made of the same material for the purpose of reducing friction or avoiding unnecessary wear.

In one embodiment the at least one inner tube is connected to the outer tube by means of a connecting rod where the connecting rod connects the outer wall of the inner tube with the inner wall of the outer tube.

A connection of this type ensures that the at least one inner tube does not move relative to the outer tube. Furthermore, this is a simple connection with no negative impact on dispensing through the outer tube or the at least one inner tube.

In one embodiment the outer tube is connected to the dispensing lid by means of a connecting piece where the connecting piece is connected to the outer wall of the outer tube and connected to the dispensing lid.

By connecting the outer wall of the outer tube to the dispensing lid it is ensured that the outer tube is firmly connected to the dispensing lid, without obstructing the passage through the outer tube. Connecting the connecting piece to the outer tube and the dispensing lid could, as an example, be done by welding, spot welding, gluing or similar.

In one embodiment the lower tube comprises a recess where the recess has been provided in one end of the lower tube, especially the end designed to extend into the handheld dispensing container.

The purpose of the recess is to ensure that the lower tube when dispensing from the dispensing lid is filled with material. If the lower tuber is essentially filled with material during dispensing, this ensures that the dispensed quantity does not vary for different dispensing actions. For example if the lower tube is only half filled, the dispensed quantity will not be same as if the lower tube is essentially filled with material. Thereby the recess can ensure dispensing quantities of a higher uniformity from the dispensing lid.

In one embodiment the dispensing lid comprises a thread where the thread is designed to engage with a standardised thread of a piece of packaging.

Packaging filled with coffee granules is typically provided with a threaded lid; however, these lids do not allow for controllable dispensing since the only purpose of the lid is to shield the coffee granules from the ambient environment. By replacing a packaging lid with a dispensing lid, in accordance with the present explanation, allows for a possibility to control the dispensed quantity directly from a piece of packaging while at the same time shielding the contents of the packaging from the ambient environment.

According to another aspect of the invention, a handheld dispensing container is given with a dispensing lid in accordance with any of the claims 1-9.

Advantages and embodiments described with reference to the first aspect of the invention also apply to the second aspect of the invention.

### Brief description of the drawings

Below the embodiments of the invention are described with references to schematic drawings where
Fig. 1 shows a schematic cross section from the side of an embodiment of the dispensing lid.
Fig. 2 shows a schematic cross section seen from line II-II in Fig. 1.
Fig. 3 shows the dispensing lid in Fig. 2 and Fig. 1 as seen from above.

### Detailed description of the invention

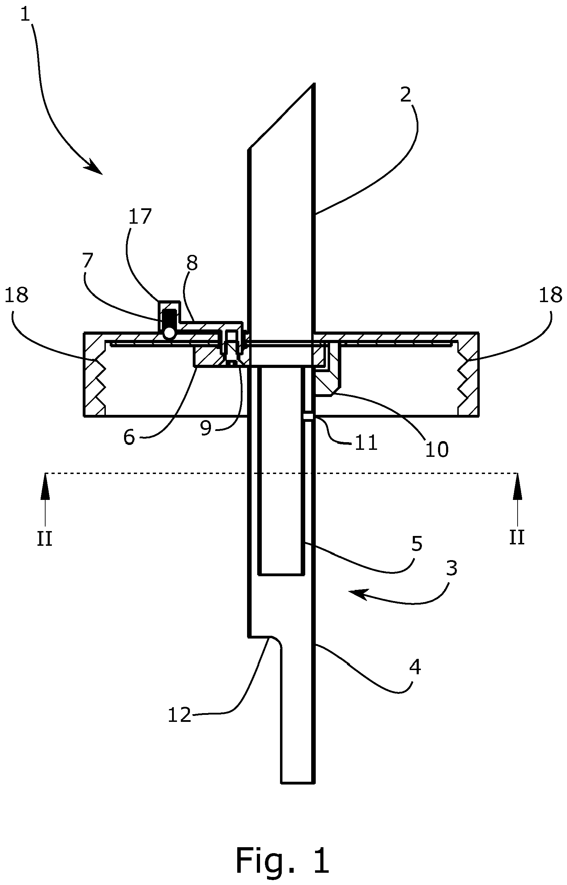

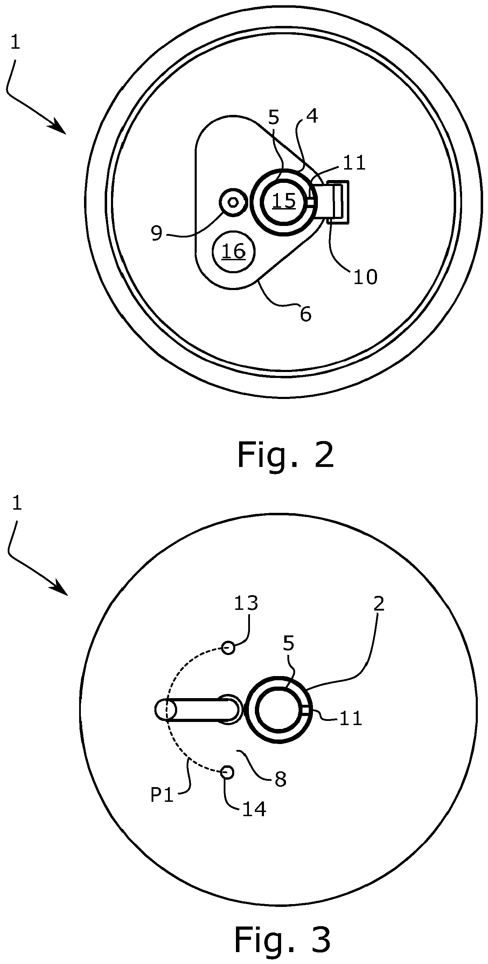

Fig. 1 shows a schematic cross section from the side of an embodiment of the dispensing lid 1. The dispensing lid 1 comprises a dispensing spout 2. The dispensing spout 2 extends in the shown embodiment essentially at a right angle from the dispensing lid 1. The dispensing spout 2 can also extend at an angle other than a right angle from the dispensing lid. One end of the dispensing spout 2 is bevelled in order to facilitate dispensing from this end. The dispensing spout can be made of a synthetic material or stainless steel. The dispensing lid 1 further comprises a lower tube 3. The lower tube 3 is designed to extend within the handheld container on which the dispensing lid 1 sits. Together with the dispensing spout 2 the lower tube 3 define a passage for dispensing. The lower tube 3 comprises an outer tube 4 and an inner tube 5. The inner tube 5 extends within and along the outer tube 4. The inner tube 5 and the outer tube 4 are placed concentrically. The inner tube 5 is mechanically fastened to the outer tube 4. Fastening of the inner tube 5 is achieved be means of a connecting rod 11 where the connecting rod connects the outer wall of the inner tube 5 to the inner wall of the outer tube 4. The outer tube 4 is connected to the dispensing lid 1 by means of a connecting piece 10. The connecting piece 10 connects the outer wall of the outer tube to the dispensing lid. The inner tube 5 and the outer tube can be made of a synthetic material or stainless steel. The inner tube 3 and the dispensing spout 2 are separated by a gap. The passage between the lower tube 3 and the dispensing spout 2 can be closed by sealing off the passage by means of a sealing plate 6, by placing part of the sealing plate 6 in the gap. The sealing plate 6 can seal off or open the passage between the lower tube 3 and the dispensing spout 2; a more detailed explanation of this can be found below in the description of Fig. 2 and Fig. 3. The thickness of the sealing plate 6 has been adapted to the gap between the dispensing spout 2 and the lower tube 3; this ensures a tight seal when the sealing plate 6 seals off the passage. Alternatively or in combination with an adapted thickness of the sealing plate, the dispensing lid 1 can be provided with a seal, for example provided on the end of the upper tube 2 closest to the lower tube 3. This seal ensures that the sealing plate 6 closes tight when the sealing plate blocks the passage. The seal can be an O-ring. In the shown embodiment, the sealing plate 6 is pivotally suspended in the dispensing lid 1. The sealing plate 6 is connected to an axle 9 which is offset relative to the inner tube 5 and/or the outer tube 4. The axle 9 extends at right angles to the sealing plate 6. The axle 9 is connected by means of an arm 8. Consequently, the sealing plate 6 can pivot by moving the arm 8. The arm 8 has a free end provided with a protuberance 17 where this protuberance 17 can act as a handle. Preferably, a spring ball 7 is located inside the protuberance 17 on the arm 8. The lower tube 3 has been provided with a recess 12 in one end. The recess 12 has been produced in order to generate a shovelling function for the lower tube 3 whereby material in a container on which the dispensing lid 1 sits can be collected in the lower tube when the container is tilted. The dispensing lid 1 in the shown embodiment is provided with a thread 18. The thread 18 enables the dispensing lid 1 to engage with the thread of a piece of packaging, especially a piece of packaging holding the powder or granules upon delivery.

Fig. 2 shows a schematic cross section seen from line II-II in Fig. 1 of an embodiment of the dispensing lid. The sealing plate 6 has been provided as an essentially triangular disc. The sealing plate 6 has further been provided with a first through hole 15 and a second through hole 16. The number of through holes in the sealing plate 6 can vary as applicable between different types of dispensing lids. There can be a single through hole, two through holes, three through holes or more. If the sealing plate 6 has been provided with only a single through hole, it is still possible to achieve different dispensed quantities. In the instance with a single through hole, the single through hole can have a diameter equivalent to or smaller than the inner tube 5; consequently, dispensing possibilities are generated either by pivoting the single through hole in the gap between the dispensing spout 2 and the lower tube 3, thereby allowing dispensing from the inner tube 5, or by pivoting the sealing plate completely away from the gap thereby allowing dispensing from the entire lower tube 3. The first through hole 15 has a diameter which matches the outer tube 4, the result of which is that when the first through hole 15 is pivoted into the gap between the dispensing spout 2 and the lower tube 3, the dispensing lid is being prepared to dispense from the entire lower tube 3. The second through hole 16 has a diameter which matches the inner tube 5, the result of which is that when the second through hole 16 is pivoted into the gap between the dispensing spout 2 and the lower tube 3 the dispensing lid is being prepared to dispense only from the inner tube 5. If another non-perforated part of the sealing plate 6 is pivoted into the gap between the dispensing spout 2 and the lower tube 3, the passage will be blocked and dispensing will not be possible. In the shown embodiment with a triangular disc, where two of the corners of the disc are provided with through holes, whereas the third corner is non-perforated, it is made possible that dispensing can be selected according to which corner is located in the gap between the lower tube 3 and the dispensing spout 2. Fig. 3 shows the dispensing lid in Fig. 2 and Fig. 1 as seen from above. In the shown embodiment the arm 8 can pivot along a first curve P1. The first curve P1 forms essentially a semicircle. On the first pivot axis P1 a first indent 13 and a second indent 14 are located. When the arm 8 moves along the first curve P1, the spring ball 7 can engage with either the first indent 14 or the second indent 13. In the shown embodiment two indents are shown, although it is also possible with a single indent, three indents or more indents. The sealing plate 6 in the shown embodiment is configured in such a manner that when the spring ball 7 engages with the first indent 13, the sealing plate 6 pivots into the gap to block for the passage. This is equivalent to a situation where the corner of the essentially triangular disc, which has no through hole, is located in the gap between the dispensing spout 2 and the lower tube 3. On the contrary, when the spring ball 7 engages with the second indent 14, the corner of the triangular disc, where the second through hole is located, pivots into the gap between the dispensing spout 2 and the lower tube 3.

## Claims

1. Dispensing lid (1) for dispensing from a handheld container, where the dispensing lid (1) comprises a dispensing spout (2) and a lower tube (3), where the lower tube (3) is designed to extend within the handheld container and where the dispensing spout (2) and the lower tube (3) define a passage for dispensing,
**characterised in that** the dispensing lid (1) further comprises a sealing mechanism comprising a moveable sealing plate (6), where the sealing plate (6) is provided with a first through hole (15) and is moveably suspended in the dispensing lid (1), where there is a gap between the dispensing spout (2) and the lower tube (3), where the size of the gap is essentially equivalent to the thickness of the sealing plate (6), where the lower tube (3) comprises one outer tube (4) and at least one inner tube (5), where the at least one inner tube (5) extends along the outer tube (4) and is mechanically secured to the outer tube (4) thereby forming a gap between the inner tube (5) and the outer tube (4), where the first through hole (15) has a diameter equivalent to or smaller than the at least one inner tube (5), where the moveable sealing plate (6) can be moved between a first position, where the first through hole (15) is located in the gap between the lower tube (3) and the dispensing spout (2), a second position, where another part of the sealing plate (6) is located in the gap between the lower tube (3) and the dispensing spout (2), and a third position, where the sealing plate (6) does not block the passage between the lower tube (3) and the dispensing spout (2).

2. The dispensing lid (1) according to claim 1, where the sealing mechanism further comprises an axle (9) and an arm (8), where the axle (9) is connected to the sealing plate (6), where the arm (8) is connected to the axle (9) and designed to extend outside of the handheld container, where a user of the dispensing lid (1) can move the arm (8) and thereby move the sealing plate (6).

3. The dispensing lid (1) according to claim 2, where the dispensing lid (1) comprises a first indent (14) and a second indent (13), where the sealing mechanism arm (8) comprises a spring ball (7), where the spring ball (7) is designed to engage with the first indent (14) and the second indent (13), where a user of the dispensing lid (1) can move the arm (8) to allow the spring ball (7) to engage with the first indent (14) or the second indent (13), where the other half of the moveable sealing plate (6) is located in the gap between the lower tube (3) and the dispensing spout (2) when the spring ball (7) has engaged with the second indent (13), and where the first through hole (15) is located in the gap between the lower tube (3) and the dispensing spout (2) when the spring ball (7) has engaged with the first indent (14).

4. The dispensing lid (1) according to any of the previous claims, where the lower tube (3) comprises several inner tubes (5), and where the sealing plate (6) comprises several through holes (15, 16), where each of the several inner tubes (5) has a single associated through hole (15, 16) with a diameter equivalent to the associated inner tube (5) such that a user of the dispensing lid (1) can move the sealing plate (6) in order to control whether the other part of the sealing plate (6) or which of the several through holes (15 ,16) are in the gap between the lower tube (3) and the dispensing spout (2).

5. The dispensing lid (1) according to any of the previous claims, where the lower tube (3), the sealing plate (6) and the dispensing spout (2) are made of stainless steel and/or a synthetic material such as plastic.

6. The dispensing lid (1) according to any of the previous claims, where the at least one inner tube (5) is connected to the outer tube (4) by means of a connecting rod (11) where the connecting rod (11) connects the outer wall of the inner tube (5) with the inner wall of the outer tube (4).

7. The dispensing lid (1) according to any of the previous claims, where the outer tube (4) is connected to the dispensing lid (1) by means of a connecting piece (10) where the connecting piece (10) is connected to the outer wall of the outer tube (4) and connected to the dispensing lid (1).

8. The dispensing lid according to any of the previous claims, where the lower tube comprises a recess (12) where the recess (12) has been provided in one end of the lower tube (3), especially the end designed to extend into the handheld dispensing container.

9. The dispensing lid (1) according to any of the previous claims, where the dispensing lid (1) further comprises a thread (18), where the thread (18) is designed to engage with a standardised thread of a piece of packaging.

10. Handheld dispensing container with a dispensing lid (1) according to any of the claims 1-9.
